# EUROPÄISCHE PATENTSCHRIFT

(11) **EP 0 423 425 B1**
(45) Veröffentlichungstag und Bekanntmachung des Hinweises auf die Patenterteilung: **15.09.1993**
(21) Anmeldenummer: 90111028.8
(22) Anmeldetag: 12.06.1990
(51) Int. Cl.: B23B 31/20

(54) **Spannzange fuer automatische Werkzeugmaschinen**
Collet chuck for automatic machine tools
Pince de serrage pour machines-outils automatiques

(30) Priorität: 20.10.1989 IT 2207689
(43) Veröffentlichungstag der Anmeldung: 24.04.1991
(73) Patentinhaber: GILDEMEISTER ITALIANA S.p.A., I-24030 Brembate di Sopra (IT)
(72) Erfinder: Ronzoni, Enrico, I-24030 Brembate Sopra (BG) (IT)
(74) Vertreter: Mayer, Hans Benno, Dipl.-Ing.

(56) Entgegenhaltungen:
- EP-A- 0 119 750
- DE-A- 3 712 820
- DE-C- 3 105 537
- DE-C- 3 327 046
- US-A- 3 411 796

## Beschreibung

Die vorstehende Erfindung betrifft eine Spannzange fuer automatische Werkzeugmaschinen nach dem Oberbegriff des Anspruchs 1.

Spannzangen der genannten Art werden zum Spannen von stangenfoermigen vollen oder hohlen Werkstuecken in automatischen Werkzeugmaschinen, die mit hohem Leistungsgrad arbeiten, z. B. in automatischen Mehrspindeldrehmaschinen, eingesetzt.

Bekannte Spannzangen dieser Art weisen einen geschlossen ausgefuehrten Aufnahmekoerper sowie einen geschlitzten Zangenkoerper zur Bildung elastischer Spannbacken in Form eines Kegelstumpfes auf. Die Zangenbacken haben eine gewisse Laengserstreckung und umgreifen auf ihrer Innenseite die zu spannende Stange oder das zu spannende Werkstueck allgemein. Die Aussenflaeche der Zange, die als geschliffenes Bauteil ausgebildet ist, steht mit dem konischen Sitz des Aufnahmekoerpers in Wirkverbindung, um bei nach rueckwaerts gerichteter Verschiebung der Spannzange eine radiale Bewegung der Backen zum Spannen des die Zangenhuelse durchdringenden Werkstueckes zu ermoeglichen.

Um den Spannvorgang zu vereinfachen, ist bei bekannten Zangen vorgesehen, dass der Winkel des Kegelstumpfes des Aufnahmekoerpers sowie der Winkel der im Aufnahmekoerper angeordneten Spannzange unterschiedliche Werte aufweist. Aufgrund dieser Bauart kann die Beruehrung zwischen dem kegelstumpffoermigen Aufnahmekoerper und der Aussenflaeche der Spannzange nicht vollflaechig erfolgen, sondern nur auf einzelnen Teilflaechen, deren Flaechenerstreckung von der Ausfuehrungsform der Zange und dem Durchmesser des zu spannenden Werkstueckes abhaengig ist. Die Beruehrungsflaechen zwischen dem Zangenkoerper und dem Aufnahmekoerper fuer die Zange sind besonders an der Vorderseite der Zange verhaeltnismaessig klein, was zur Folge hat, dass das stangenfoermige Werkstueck nur im vorderen Teil der Zange und nicht ueber deren gesamte Flaeche gespannt wird. Da das stangenfoermige Werkstueck nicht vollflaechig gespannt wird, sondern nur punktfoermig, tritt der Nachteil ein, dass das stangenfoermige Werkstueck, das eine Laenge von mehreren Metern aufweisen kann, waehrend des Bearbeitungsvorganges zu Durchfuehrung von Schwingungsbewegungen neigt. Um diesem Nachteil entgegenzuwirken wird versucht, in bekannten Spannzangen durch erhoehte Schliesskraefte groessere Spannkraefte auf das Werkstueck zu uebertragen, dies fuehrt jedoch zu Abnuetzungserscheinungen und Verformungen. Diese sind abhaengig von der geometrischen Gestalt, d. h. der Kegelstumpfform der bekannten Zangen. Die bekannten Spannzangen haben weiter den Nachteil, dass bei Aenderung der Aussenabmessung des stangenfoermigen Werkstueckes gegenueber dem Nenndurchmesser fuer den die Spannzange bestimmt ist, die Zangenbacken mehr auf der Aussenseite des kegelfoermigen Aufnahmekoerpers oder mehr auf der Innenseite des Aufnahmekoerpers zu liegen kommen. Dies fuehrt zu einer Betonung der genannten Nachteile.

In den bekannten Spannvorrichtungen ist das Endstueck des innenliegenden Zangenkoerpers, das den Spannbacken gegenueberliegt, mit einem Verbindungsgewinde versehen, das mit einer Verschiebe- oder Spannvorrichtung verbindbar ist. Die Herstellung dieser Wirkverbindung hat sich als arbeitsaufwendig erwiesen und ist von der Bedienungsperson nur in umstaendlicher Weise aufgrund der Laengserstreckung der Betaetigungsvorrichtung durchfuehrbar.

Da es bei Verwendung bekannter Spannzangen notwendig ist, eine erhebliche Axialkraft auf die Zange aufzubringen, aber nur eine bescheidene radiale Spannkraft ueber die Zangenbacken auf das Werkstueck aufzubringen ist, treten Beschaedigungen an den Kontaktflaechen der Zange auf, die haeufig auch zu Rissbildungen fuehren. Da die bekannten Spannzangen ferner einen beschraenkten Schliesshub aufweisen, koennen sie nur fuer teures, gezogenes Stangenmaterial Einsatz finden. Verformungen der bekannten Spannbacken koennen ferner zu unrundem Lauf des Werkstueckes mit den davon herruehrenden Nachteilen fuehren. Aufgabe der vorstehenden Erfindung ist es, eine neue Spannzange der genannten Art zu schaffen, die grosse Beruehrungsflaechen zwischen den Zangenbacken und dem Aufnahmekoerper schafft, um eine hohe und gleichmaessige Spannkraft ueber die gesamte Axialerstreckung der Backen unter Aufbringung von kleineren Zugkraeften zu erreichen, ferner soll eine gute Spannwirkung bei verhaeltnismaessig grossem Zangenhub erreicht werden, um die bekannten Schwingungserscheinungen fuer stangenfoermige Werkstuecke waehrend der Bearbeitung zu vermeiden, ferner soll eine Beschaedigung der Aussenflaeche des Werkstueckes vermieden werden und ein sicheres Spannen auch von billigem, gewalztem Stangenmaterial ermoeglicht werden.

Es ist weiterhin Aufgabe der Erfindung eine Spannzange zu schaffen, die ein schnelles Verbinden mit der Zugstange ermoeglicht.

Dies fuehrt zu einer Verminderung der fuer den Ruestvorgang der Werkzeugmaschine erforderlichen Zeiten und somit zu einer Verbesserung des Wirkungsgrades der Maschine.

Die erfindungsgemaesse Aufgabe wird durch eine Spannzange geloest, die sich dadurch kennzeichnet, dass der Aufnahmesitz des Aufnahmekoerpers sowie die aeussere Gestalt der Zangenbacken Form eines Zylinderstumpfes mit vieleckiger Grundflaeche aufweisen.

Vorteilhafte Ausführungsformen der Erfindung koennen den Unteranspruechen und der folgenden Beschreibung entnommen werden.

Mit der Spannzange gemäß Anspruch 1 koennen wesentliche Vorteile erzielt werden.

Durch Vorsehung einer pyramidenstumpfartigen Verbindung zwischen dem Aufnahmekoerper und den Backen der Spannzange, wird das stangenfoermige Material gleichmaessig ueber die gesamte Laenge der Spannzange mit festem Griff gespannt. Der Bewegungshub der Spannbacken ist sehr gross und erlaubt das Spannen verschiedener Durchmesser des stangenfoermigen Materials. Es wird moeglich, auch billigeres Stangenmaterial, z. B. gewalztes Material, sicher zu spannen. Dadurch wird es moeglich, die Spannzangen weniger haeufig auszutauschen, wodurch der Wirkungsgrad der Maschine erheblich steigt. Das gleichmaessige Spannen der Backen in Axialrichtung ermoeglicht es, die Spannkraefte gleichmaessig auf das Werkstueck zu verteilen, wodurch Beschaedigungen des zu bearbeitenden Werkstueckes vermieden werden. Es koennen auch besonders empfindliche Werkstuecke ohne Auftreten von unerwuenschter Verformung gespannt werden, z. B. Rohrmaterial oder Profilstuecke aus Leichtmetall. Der vollflaechige Beruehrungskontakt zwischen den ebenen Aussenflaechen der Backen und den entsprechenden Innenflaechen der Ausnehmung des Aufnahmekoerpers der Zange erlaubt es, oertliche Beschaedigungen der Zange und des Aufnahmekoerpers zu vermeiden. Dadurch wird die Lebensdauer der Spannzange wesentlich erhoeht. Die pyramidenstumpfartig ausgebildeten Ausnehmung im Aufnahmekoerper der Zange kann auf verschiedene Weise hergestellt werden, z. B. unter Anwendung von Elektroerosionsverfahren oder durch Verbinden plattenfoermiger segmentartiger Bauteile zur Bildung einer inneren Aufnahme, die die pyramidenstumpfartige Ausnehmung im Aufnahmekoerper der Zange umschreiben. Im letzteren Fall koennen die plattenfoermigen Bauteile mit sehr grosser Genauigkeit bearbeitet werden, ohne die Fertigungskosten wesentlich zu erhoehen.

Die Ausbildung als Schnellverschlusses des mit einem Gewinde versehenen Endstueckes des Zangenkoerpers ermoeglicht eine rasche, bequeme, sichere und genaue Verbindung zwischen der Zangenhuelse und der dazugehoerigen Zugstange. Ein weiterer Vorteil der erfindungsgemaessen Zange ist in einem wesentlich vergroesserten Radialhub waehrend der Schliessbewegung der Backen zu sehen. Dadurch kann mittels einer beschraenkten Anzahl von Spannzangen eine grosse Anzahl verschiedener stangenfoermiger Werkstuecke mit unterschiedlichen Aussendurchmessern gespannt werden.

Mit der Spannzange werden die Beruehrungsflaechen zwischen Aufnahmekoerper und Zange von ebenen Flaechen gebildet, was ein vollflaechiges Anliegen der Zangenbacken moeglich macht. Die Neigungswinkel der Flaechen des Aufnahmekoerpers und die der Spannbacken sind identisch, um eine vollflaechige Auflage zu erzielen. Ein weiterer Vorteil der vorgeschlagenen Spannzange ist darin zu sehen, dass fuer die Betaetigung der Spannbacken sehr kleine Zugkraefte erforderlich sind. Somit kann auch die Vorrichtung zum Aufbringen und Einstellen dieser Zugkraefte weniger aufwendig ausgebildet sein.

Weitere Merkmale, Vorteile und Einzelheiten der Spannzange koennen der nun folgenden Beschreibung eines Ausfuehrungsbeispieles entnommen werden.

In den Zeichnungen zeigen schematisch:

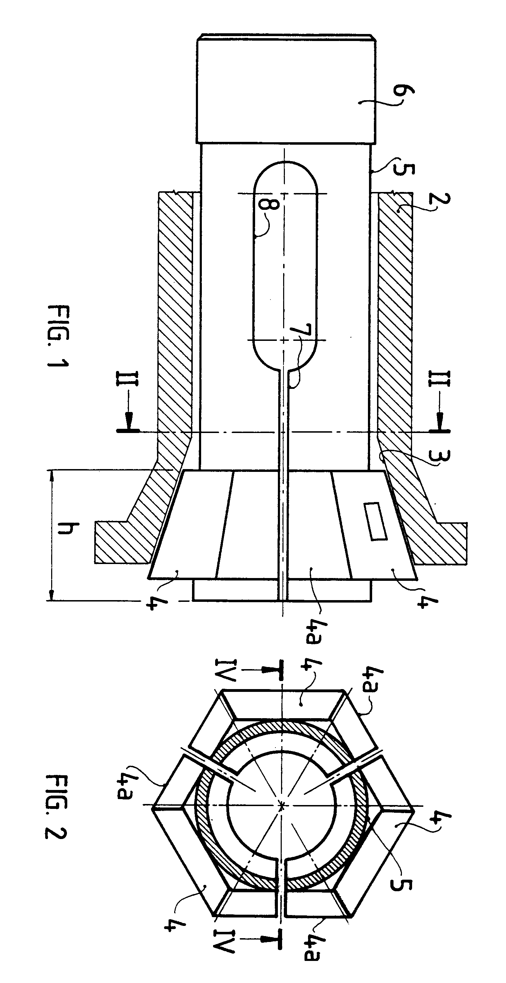

Fig. 1 eine Ansicht der Spannzange in einem im Schnitt dargestellten Aufnahmekoerper;
Fig. 2 einen Schnitt nach Linie II-II der Fig. 1 durch den Zangenkoerper;

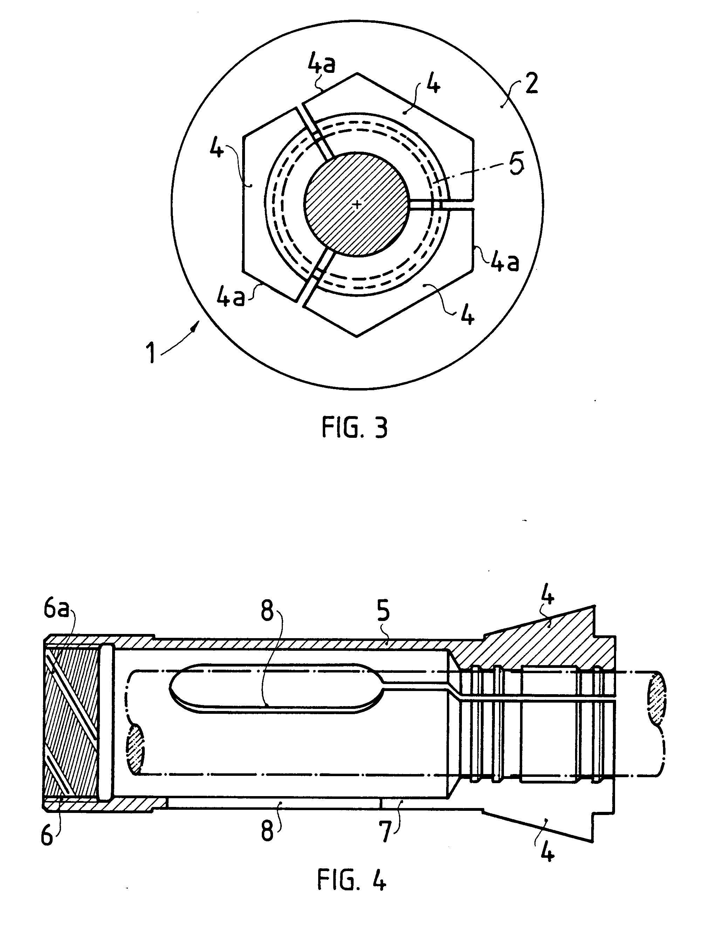

Fig. 3 eine Vorderansicht der Spannzange nach Fig. 1; und
Fig. 4 einen Laengsschnitt der Zange nach Linie IV-IV der Fig. 2, mit eingesetztem stangenfoermigen Werkstueck.

In den Zeichnungen wird die Spannzange gesamthaft mit 1 gekennzeichnet. Die Spannzange 1 weist einen aeusseren huelsenartigen Aufnahmekoerper 2 auf, der an seiner Vorderseite einen Innnensitz 3 aufweist, der Form eines Pyramidenstumpfes aufweist. In der Ausnehmung 3 finden die Backen 4 der Spannzange Platz. Die Backen 4 sind am Vorderende einer Zangenhuelse 5 angeordnet, die an ihrem rueckwaertigen Ende ein Verbindungsteil 6 fuer eine Zug-oder Spannstange, die nicht dargestellt ist, aufweist. Wie der Zeichnung entnommen werden kann, weisen die Spannbacken 4 in ihrer Gesamtheit Form eines Pyramidenstumpfes auf, der mehreckige z. B. sechseckige Grundflaeche und eine Hoehe (h) aufweist. Die Seitenflaechen 4a sind als ebene Flaechen ausgebildet. Der Neigungswinkel zwischen diesen Flaechen entspricht dem Neigungswinkel der Flaechen der Ausnehmung 3, die im Aufnahmekoerper 2 vorgesehen ist. Die Ausnehmung 3 kann auf verschiedene Weisen hergestellt werden, z. B. unter Verwendung von Elektroerosionsverfahren oder unter Vorsehung eines aus zusammengefuegten Segmenten gebildeten Gehaeuses. Mit 7 sind Trennschlitze zwischen den Backen 4 gekennzeichnet. Die Trennschlitze 7 muenden in bekannter Weise in fensterartige Oeffnungen 8 und dienen dazu, den Backen 4 die notwendige Elastizitaet zu verleihen.

Durch die pyramidenstumpffoermige Gestaltung des Aussenumfanges der Spannbacken 4 sowie durch gleichartige Ausbildung der Innenaufnahme 3 des Aufnahmekoerpers 2 fuer die Spannzange, wird gewaehrleistet, dass die einzelnen Flaechen oder Seiten der zusammenzufuegenden Bauteile stets parallel zueinander angeordnet sind, unabhaengig von ihrer gegenseitigen Lage in Axialrichtung. Somit wird eine vollflaechige Auflage zwischen den Aussenseiten der Spannbacken und den zugeordneten Auflageflaechen der Ausnehmung 3, unabhaengig von der Axialverschiebung zwischen diesen Bauteilen erzielt. Es erfolgt eine vollflaechige Anlage zwischen diesen Bauteilen auch bei sich aenderndem Durchmesser des stangenfoermigen zu spannenden Werkstueckes. Diese vollflaechige Wirkverbindung garantiert bestmoegliche und gleichmaessige Kraftuebertragung in Radialrichtung, d. h. in Spannrichtung, ueber die gesamte Erstreckung (h) der Spannbacken 4, ueber deren gesamte Axialerstreckung laengs der zu bearbeitenden Stange. Es koennen somit wesentlich groessere Spannkraefte bei verminderten, auf die Spannzange einwirkenden Zugkraeften in Radialrichtung uebertragen werden. Durch das vollflaechige Spannen wird ein gleichmaessiges Umfassen des Werkstueckes auf der gesamten Laengserstreckung der Spannbacken erreicht. Dadurch wird das stangenfoermige zu bearbeitende Werkstueck in bestmoeglicher Weise gespannt und die nachteiligen Schwingungserscheinungen des zu bearbeitenden stangenfoermigen Werkstueckes koennen vermieden werden. Durch Vorsehen eines Gewindestutzens 6 der mit eingefraesten Laengsnuten 6a versehen ist, wird eine Schnellverbindung zwischen der Spannzange und der Zugeinrichtung durch einfache Drehbewegung, die kleiner als eine Vierteldrehung ist, erreicht.

Somit besteht die Moeglichkeit, die Spannzange aeusserst rasch und einfach in die Maschine einzusetzen oder aus dieser auszubauen.

Durch die pyramidenstumpffoermige Ausbildung der Spannzange sowie der zugeordneten Aufnahme im Aufnahmekoerper der Zange werden in sicherer Weise, aufgrund einer formschluessigen Wirkverbindung zwischen diesen Bauteilen, Beschaedigungen oder eine fruehzeitige Abnuetzung zwischen den in Wirkverbindung tretenden Flaechen des Zangenwerkzeuges vermieden.

Mit der Spannzange koennen ferner weitere Verschleisserscheinungen aufgrund gegenseitiger Reibung vermieden werden, da bei Montage der Spannzange eine unterschiedliche Verbindung - von Fall zu Fall lageverschieden - zwischen den einzelnen aeusseren Teilflaechen der Spannbacken und den Flaechen des Innensitzes des Aufnahmekoerpers eintritt.

In der Praxis ist es ohne weiteres moeglich, unterschiedliche Formen fuer die pyramidenstumpfartigen Bauteile vorzusehen. Dies bezieht sich sowohl auf die vieleckige Ausfuehrung der Grundflaeche des Koerpers als auch auf die der Laengserstreckung der Spannbacken. Ferner koennen auch andersartige Schnellverschluesse zwischen Zugstange und Spannzange vorgesehen werden. Auch wenn es nicht genauer beschrieben wurde, ist es moeglich, reibungsvermindernde Bauteile vorzusehen, die in die Bregrenzungsflaechen der Spannbacken und/oder der Aufnahmeflaeche des Aussenkoerpers einsetzbar sind.

Dank der erzielbaren Wirkverbindung zwischen den vieleckig und pyramidenstumpffoermig ausgebildeten Spannbacken und einer entsprechenden Formgebung des Aufnahmekoerpers, weist die Zange eine erhebliche Elastizitaet auf, die zu einer besonders guten Radialbewegung der Spannbacken fuehrt. Dies schafft die Moeglichkeit, auch stangenfoermige Werkstuecke mit rauher, z. B. gewalzter Aussenoberflaeche sicher zu spannen und zu bearbeiten. Dies wirkt sich kostenguenstig gegenueber den teueren gezogenen Stangenmaterialien aus. Durch Verwendung der Spannzange in automatischen Werkzeugmaschinen, z. B. in automatischen Mehrspindeldrehmaschinen, wird das Anwendungsgebiet derartiger Maschinen wesentlich erweitert.

## Patentansprüche

1. Spannzange fuer automatische Werkzeugmaschinen, wie Mehrspindeldrehmaschinen, bestehend aus einem huelsenfoermigen Aufnahmekoerper (2) und einem darin angeordneten zangenfoermigen Bauteil (4, 5, 6) mit elastischen Spannbacken (4), sowie einer Zugvorrichtung zum Schliessen der Spannzange um das stangenfoermige Bauteil, wobei im Aufnahmekoerper (2) eine Ausnehmung (3) fuer die Spannbacken (4) der Zange vorgesehen sind, **dadurch gekennzeichnet**, dass die Ausnehmung (3) im Aufnahmekoerper (2) sowie die aeussere Gestalt der Spannbacken (4), die Form eines Kegelstumpfes mit vieleckiger Grundflaeche aufweisen.

2. Spannzange, nach Patentanspruch 1, **dadurch gekennzeichnet**, dass die Seitenflaechen der kegelstumpffoermigen Ausnehmung (3) des Aufnahmekoerpers (2) und die Flaechen der Spannbacken (4) von ebenen Flaechen begrenzt sind.

3. Spannzange, nach Patentanspruch 1 und 2, **dadurch gekennzeichnet**, dass die Neigungswinkel der Bregrenzungsflaechen des Pyramidenstumpfes fuer die Ausnehmung (3) des Aufnahmekoerpers (2) und fuer die Spannbacken (4) gleich ausgebildet sind.

4. Spannzange, nach Anspruch 1 bis 3, **dadurch gekennzeichnet**, dass der pyramidenstumpffoermig ausgebildete Koerper (2, 3, 4) eine sechseckige Basis aufweist.

5. Spannzange, nach Patentanspruch 1 bis 4, **dadurch** **gekennzeichnet**, dass die Laengserstreckung (h) der Spannbacken (4) in der Groessenordnung der Grundseite des aeusseren Sechseckes der Spannbacke (4) ist.

6. Spannzange, nach Patentanspruch 1, **dadurch gekennzeichnet**, dass die innere, pyramidenstumpffoermige Ausnehmung (3) des Aufnahmekoerpers (2) der Zange mittels Elektroerosionsverfahren hergestellt ist.

7. Spannzange, nach Anspruch 1, **dadurch gekennzeichnet**, dass die Innenausnehmung (3) des Aufnahmekoerpers (2) durch kaefigartiges Zusammenfuegen plattenfoermiger Bauteile hergestellt ist.

8. Spannzange, nach Patentanspruch 1, **dadurch gekennzeichnet**, dass der endseitig vorgesehene Verbindungsstutzen (6) des Huelsenkoerpers (5) der Spannzange (4) als Schnellverschluss ausgebildet ist.

9. Spannzange, nach Patentspruch 8, **dadurch gekennzeichnet**, dass der als Schnellverschluss vorgesehene Anschluss (6) des Huelsenkoerpers (5) der Spannzange (4) als Gewindeteil (6a) ausgebildet ist und umfangsseitig angeordnete Einfraesungen aufweist.

10. Spannzange, nach Anspruch 1, **dadurch gekennzeichnet**, dass in die Seitenflaechen der pyramidenstumpffoermigen inneren Ausnehmung (3) des Aufnahmekoerpers (2) und/oder in die Flaechen (4a) der Spannbacken (4) plattenfoermige reibungsvermindernde Bauteile eingesetzt sind.

## Revendications

1. Pince de serrage pour des machines-outils automatiques, tels que des tours multibroches, constituée d'un corps de réception (2) en forme de douille et d'un composant en forme de pince (4, 5, 6) disposé dans celui-ci avec des mâchoires de serrage élastiques (4), ainsi qu'un dispositif de traction pour fermer la pince de serrage autour de la pièce en forme de tige, dans le corps de réception (2) étant prévu un évidement (3) pour les mâchoires de serrage (4) de la pince, caractérisé en ce que l'évidement (3) dans le corps de réception (2) ainsi que la configuration extérieure des mâchoires de serrage (4) ont la forme d'un cône tronqué avec une surface de base polygone.

2. Pince de serrage selon la revendication 1, caractérisée en ce que les surfaces latérales de l'évidement en forme de cône tronqué (3) du corps de réception (2) et les surfaces des mâchoires de serrage (4) sont délimitées par des surfaces planes.

3. Pince de serrage selon la revendication 1 et 2, caractérisée en ce que les angles d'inclinaison des surfaces de délimitation de la pyramide tronquée pour l'évidement (3) du corps de réception (2) et ceux pour les mâchoires de serrage (4) sont réalisés de façon similaire.

4. Pince de serrage selon la revendication 1 à 3, caractérisée en ce que le corps (2, 3, 4) réalisé en forme de pyramide tronquée présente une base hexagonale.

5. Pince de serrage selon la revendication 1 à 4, caractérisée en ce que l'étendue longitudinale (h) des mâchoires de serrage (4) est de l'ordre de grandeur du côté de fond de l'hexagone extérieur de la mâchoire de serrage (4).

6. Pince de serrage selon la revendication 1, caractérisée en ce que l'évidement intérieur en forme de pyramide tronquée (3) du corps de réception (2) de la pince est réalisé au moyen d'un procédé d'électro-érosion.

7. Pince de serrage selon la revendication 1, caractérisée en ce que l'évidement intérieur (3) du corps de réception (2) est réalisée par un assemblage du type à cage de composants en forme de plaque.

8. Pince de serrage selon la revendication 1, caractérisée en ce que le manchon de liaison (6) prévu côté extrémité du corps de douille (5) de la pince de serrage (4) est réalisé sous forme de fermeture rapide.

9. Pince de serrage selon la revendication 8, caractérisée en ce que le raccord (6) prévu comme fermeture rapide du corps de douille (5) de la pince de serrage (4) est réalisée sous forme de pièce filetée (6a) et présente des fraisages répartis sur le côté du pourtour.

10. Pince de serrage selon la revendication 1, caractérisée en ce qu'on a placé dans les surfaces latérales de l'évidement intérieur (3) en forme de pyramide tronquée du corps de réception (2) et/ou dans les surfaces (4a) des mâchoires de serrage (4) des composants en forme de plaque destinés à diminuer le frottement.

## Claims

1. Collet chuck for automatic machine tools, such as multispindle lathes, consisting of a sleeve-shaped holder body (2) and of a collet-shaped component (4, 5, 6) disposed therein and having resilient clamp jaws (4), and of a pull-in device for closing the collet chuck around the bar-shaped component, a recess (3) for the clamp jaws (4) of the collet being provided in the holder body (2), characterised in that the recess (3) in the holder body (2) and the external configuration of the clamp jaws (4) have the shape of a truncated cone having a polygonal base.

2. Collet chuck according to Patent Claim 1, characterised in that the side surfaces of the frustoconical recess (3) of the holder body (2) and the surfaces of the clamp jaws (4) are bounded by plane surfaces.

3. Collet chuck according to Patent Claims 1 and 2, characterised in that the angles of inclination of the bounding surfaces of the truncated pyramid for the recess (3) of the holder body (2) and for the clamp jaws (4) are made equal.

4. Collet chuck according to Claims 1 to 3, characterised in that the frustopyramidal parts (2, 3, 4) have a hexagonal base.

5. Collet chuck according to Patent Claims 1 to 4, characterised in that the length (h) of the clamp jaws (4) is of the same order of magnitude as the base side of the external hexagon of the clamp jaw (4).

6. Collet chuck according to Patent Claim 1, characterised in that the inner frustopyramidal recess (3) of the holder body (2) of the chuck is produced by an electroerosion process.

7. Collet chuck according to Claim 1, characterised in that the inner recess (3) of the holder body (2) is produced by joining together plate-shaped components to form a cage.

8. Collet chuck according to Patent Claim 1, characterised in that the connection end (6) of the sleeve body (5) of the collet chuck (4) is in the form of a quick-acting fastener.

9. Collet chuck according to Patent Claim 8, characterised in that the connector (6) provided in the form of a quick-acting fastener for the sleeve body (5) of the collet chuck (4) is in the form of a threaded part (6a) and has grooves cut in its peripheral surface.

10. Collet chuck according to Claim 1, characterised in that plate-shaped friction-reducing components are inserted into the side surfaces of the frustopyramidal inner recess (3) of the holder body (2) and/or in the surfaces (4a) of the clamp jaws (4).
